(19) Europäisches Patentamt
European Patent Office
Office européen des brevets

(11) **EP 2 639 967 A1**

(12) **DEMANDE DE BREVET EUROPEEN**

(43) Date de publication:
**18.09.2013 Bulletin 2013/38**

(51) Int Cl.:
*H04B 1/7073* (2011.01)  *H04L 1/00* (2006.01)
*H04L 27/26* (2006.01)

(21) Numéro de dépôt: **13158690.1**

(22) Date de dépôt: **12.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **15.03.2012 FR 1252340**

(71) Demandeur: **Commissariat à l'Énergie Atomique et aux Énergies Alternatives 75015 Paris (FR)**

(72) Inventeur: **Bouvier des Noes, Mathieu 38000 Grenoble (FR)**

(74) Mandataire: **Augarde, Eric et al Brevalex 56, boulevard de l'Embouchure B.P. 27519 31075 Toulouse Cedex 2 (FR)**

(54) **Méthode d'estimation aveugle d'un code d'embrouillage d'une liaison montante CDMA2000**

(57) La présente invention concerne une méthode d'estimation d'un code d'embrouillage utilisé sur une liaison montante d'un système CDMA 2000. Après échantillonnage au double de la fréquence bribe du code d'étalement (510), le signal reçu est filtré par un filtre adapté au code d'étalement et à la mise en forme d'impulsion (520). Le signal ainsi filtré fait l'objet d'un traitement différentiel d'échantillons successifs (530) et les valeurs différentielles ainsi obtenues sont décodées (540) à l'aide d'un décodage itératif à propagation de croyance. Les valeurs décodées servent ensuite à déterminer (550) le contenu du registre à décalage du générateur du code d'embrouillage en un instant donné.

Echantillonnage du signal reçu au double de la fréquence bribe — 510

$r(k)$

Filtrage adapté au code d'étalement et à la forme d'impulsion — 520

$y(k)$

Traitement différentiel — 530

$U_{i,f}(k) = y(4k+i+j)\, y(4k+i)^*$

décodage itératif des valeurs différentielles $U_{i,f}(k)$ — 540

$x_{if}(4k)$

détermination du contenu du SR pour le code d'embrouillage — 550

$\mathbf{a}_0^s$

vérification de la synchronisation du récepteur/ code d'embrouillage — 560

**Fig. 5**

**Description**

**DOMAINE TECHNIQUE**

La présente invention concerne le domaine des télécommunications mobiles et plus particulièrement celui de la réduction de l'interférence dans un réseau femto-cellulaire.

**ÉTAT DE LA TECHNIQUE ANTÉRIEURE**

Les communications dans un réseau femto-cellulaire peuvent être affectées par des interférences générées par les communications d'une macro-cellule voisine.

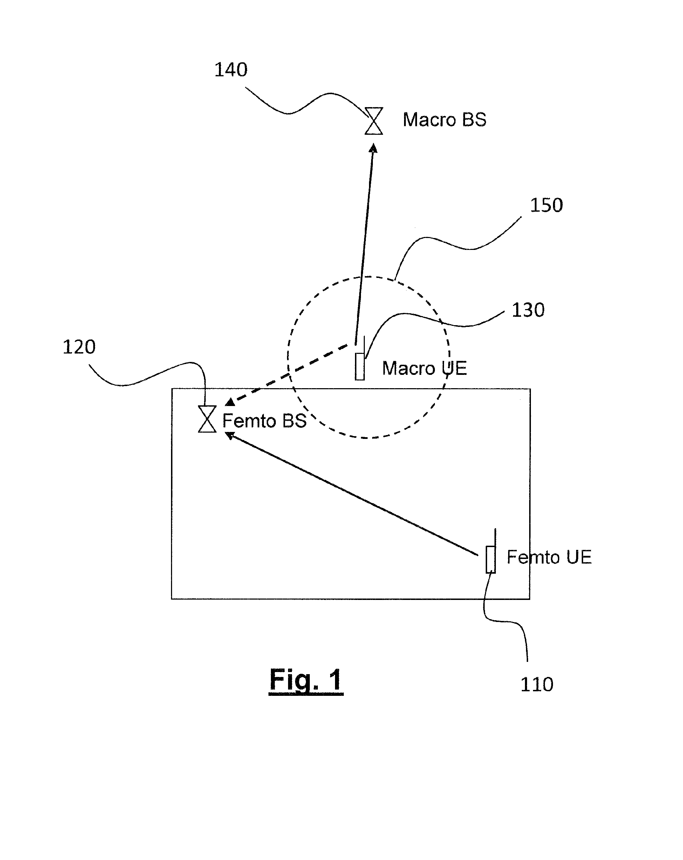

La Fig. 1 montre un scénario classique d'interférence entre un terminal attaché à une femto- cellule (« Femto UE ») , 110, et un terminal attaché à une macro- cellule (« Macro UE ») , 130. Nous supposons qu'une première liaison montante est établie dans la femto- cellule (du terminal 110 à la station de base « Femto BS », 120) et qu'une seconde liaison montante est établie dans une macro- cellule voisine (du terminal 130 à la station de base « Macro BS », 140) . Si le terminal 130 est en bordure de la macro- cellule, il devra émettre avec une puissance importante, ce qui générera une interférence importante au niveau de la femto- cellule et pourra rendre impossible la communication entre le terminal 110 et la station de base 120. Autrement dit un utilisateur (« Macro- UE ») d'un réseau macro- cellulaire crée autour de lui une zone morte (*dead zone*) , 150, dans le réseau femto- cellulaire.

Afin d'éliminer l'interférence, il est essentiel de déterminer le code d'embrouillage (*scrambling code*) utilisé sur la liaison montante du terminal 130. En effet, il n'existe pas dans la littérature d'algorithme de détection multi-utilisateur en mode aveugle pouvant faire abstraction du code d'embrouillage. Par détection en mode aveugle, on entend que la station de base femto-cellulaire 120 ne reçoit pas d'informations de la macro-cellule et notamment pas les paramètres de transmission des différents utilisateurs de la macro-cellule.

En revanche dès lors que le code d'embrouillage est connu, il est possible d'estimer localement le signal reçu en provenance du terminal 130 et de soustraire sa contribution dans le récepteur du terminal 120.

Lorsque le réseau macro-cellulaire est du type CDMA 2000, la détermination en mode aveugle est rendue encore plus complexe par le fait que chaque utilisateur de ce système utilise un code d'embrouillage spécifique. En outre, le signal émis par l'utilisateur étant étendu spectralement, l'estimation du code d'embrouillage doit se faire à faible niveau signal à bruit.

Un but de la présente invention est de proposer une méthode de détermination d'un code d'embrouillage utilisé par une liaison montante d'un système CDMA 2000, par exemple pour éliminer l'interférence générée dans une femto-cellule voisine.

**EXPOSÉ DE L'INVENTION**

La présente invention est définie comme une méthode d'estimation de code d'embrouillage utilisé sur une liaison montante d'un terminal dans un système CDMA 2000, le signal émis par le terminal sur ladite liaison étant embrouillé au moyen du code d'embrouillage, puis étalé spectralement à l'aide d'un code d'étalement et mis en forme à l'aide d'un filtre de mise en forme, le code d'embrouillage étant généré par un générateur comprenant un registre à décalage rebouclé sur lui-même, dans laquelle :

- on échantillonne au double de fréquence bribe du code d'étalement le signal reçu par un récepteur ;
- on filtre le signal ainsi échantillonné au moyen d'un filtre adapté au code d'étalement et au filtre de mise en forme pour obtenir une série d'échantillons à ladite fréquence bribe ;
- on effectue un traitement différentiel des échantillons en sortie du filtre adapté, ledit traitement différentiel fournissant des valeurs différentielles obtenues comme produit hermitien d'échantillons de ladite série ;
- on effectue un décodage itératif desdites valeurs différentielles pour obtenir le contenu du registre à décalage du générateur d'une première M-séquence représentant la somme de deux versions décalées du code d'embrouillage ;

- on détermine à partir du contenu du registre à décalage du générateur de ladite première M-séquence le contenu

  $\left( \mathbf{a}_0^s \right)$ du registre à décalage du générateur du code d'embrouillage en un instant donné.

On peut avantageusement vérifier que le récepteur est bien synchronisé par rapport au code d'embrouillage en :

- calculant des valeurs différentielles à partir de la somme de deux versions décalées du code d'embrouillage précédemment estimé ;

- corrélant sur un nombre prédéterminé d'échantillons les valeurs différentielles en sortie du filtre adapté avec les valeurs différentielles calculées à l'étape précédente ;
- déterminant si le résultat de ladite corrélation est supérieur à un seuil prédéterminé.

Dans le traitement différentiel, les valeurs différentielles peuvent être obtenues par $U_{i,j}(k) = y(4k+i+j) \, y(4k+i)^*$, $i=0, ..., 3$ et $j=i+1, 3$, où $y(k)$ représente un échantillon en sortie du filtre adapté.

Le décodage itératif est de préférence un décodage par passage de messages de croyance entre des noeuds de variables et des noeuds de contraintes, lesdites contraintes étant fournies par le polynôme générateur du code d'embrouillage.

Le contenu du registre à décalage du générateur de code d'embrouillage peut être obtenu en :

- déterminant, à partir de ladite première M-séquence, le contenu ($\mathbf{a}_{Fib}$) du registre à décalage du générateur d'une seconde M-séquence dans une représentation de Fibonacci, la première M-séquence étant décimée par rapport à la seconde M-séquence ;
- déterminant le contenu ($\mathbf{a}_{Gal}$) du registre à décalage d'un générateur de ladite seconde M-séquence selon une représentation de Galois à partir du contenu ($\mathbf{a}_{Fib}$) du registre à décalage dans la représentation de Fibonacci ;
- déterminant le contenu $\left(\mathbf{a}_0^s\right)$ du registre à décalage du générateur du code d'embrouillage à partir du contenu ($\mathbf{a}_{Gal}$) du registre à décalage du générateur de ladite seconde m-séquence selon la représentation de Galois.

La seconde M-séquence peut être de même polynôme générateur que la première M-séquence et la première M-séquence être la décimée d'un facteur 4 de la seconde M-séquence.

Le contenu, $\mathbf{a}_0^s$, du registre à décalage du générateur du code d'embrouillage peut être déterminé à partir du contenu, $\mathbf{a}_{Gal}$, du registre à décalage du générateur de ladite seconde m-séquence selon la représentation de Galois au moyen de $\mathbf{a}_0^S = \left(\mathbf{G}^{i+j} + \mathbf{G}^i\right)^{-1} \mathbf{a}_{Gal}$ où $\mathbf{G}$ est la matrice de transition d'état du générateur du code d'embrouillage dans la représentation de Galois et $i,j$ sont des entiers tels que $i=0,...,3$ et $j=i+1,3$.

## BRÈVE DESCRIPTION DES DESSINS

D'autres caractéristiques et avantages de l'invention apparaîtront à la lecture de modes de réalisation de l'invention fait en référence aux figures jointes parmi lesquelles :

La Fig. 1, déjà décrite, illustre une situation d'interférence entre une femto-cellule et une macro-cellule ;
La Fig. 2, illustre de manière schématique la structure d'un émetteur d'un utilisateur d'un système CDMA 2000 ;
La Fig. 3 représente le mécanisme d'embrouillage dans la Fig. 2 ;
La Fig. 4 représente un générateur de code d'embrouillage ;
La Fig. 5 représente de manière schématique la méthode de détermination d'un code d'embrouillage selon un mode de réalisation de l'invention ;
La Fig. 6 représente de manière schématique un mode de réalisation de l'étape d'estimation du registre du générateur du code d'embrouillage ;
Les Figs. 7A et 7B donnent la structure d'un même générateur d'une M-séquence respectivement dans une représentation de Fibonacci et une représentation de Galois.

## EXPOSÉ DÉTAILLÉ DE MODES DE RÉALISATION PARTICULIERS

L'idée de base de l'invention est d'effectuer une estimation à l'aveugle du code d'embrouillage à partir d'une multiplication différentielle en sortie d'un filtre adapté au canal de transmission.

Avant de décrire précisément cette méthode d'estimation à l'aveugle, il convient de rappeler la chaîne de traitement dans un émetteur CDMA 2000.

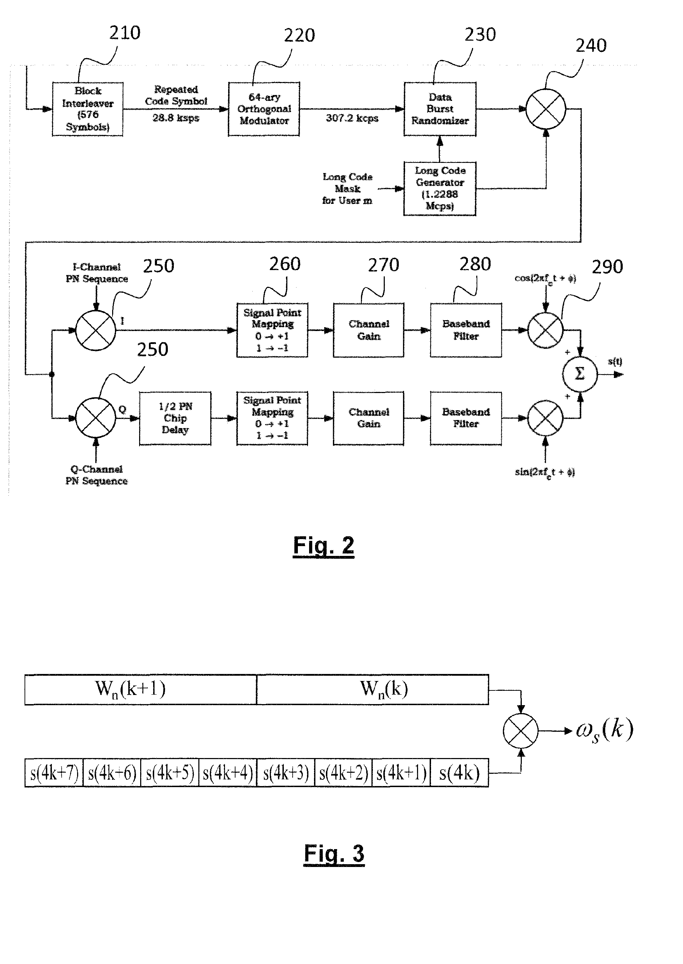

La Fig. 2 illustre de manière schématique la structure de l'émetteur d'un utilisateur dans un système CDMA 2000.

Après entrelacement en 210, chaque paquet de 6 bits fait l'objet d'une modulation de Walsh-Hadamard (W-H) en 220. Plus précisément, à chaque paquet correspond une séquence W-H en sortie du modulateur 220. Le module 230 effectue un masquage pseudo-aléatoire du signal en fonction du débit du service. Les bribes (chips) du signal font ensuite l'objet d'un embrouillage à l'aide d'un code long en 240 puis sont multipliées en phase et en quadrature par des séquences d'étalement en 250. Les composantes 1 et Q étalées en fréquence sont ensuite modulées en 260 par des modulateurs BPSK en 260 avant d'être amplifiées, en 270, filtrées par un filtre de mise en forme, en 280 et modulées à la fréquence RF en 290.

A chaque émetteur correspond un code long (ou code d'embrouillage) qui lui est propre.

Le mécanisme d'embrouillage est détaillé en Fig. 3. Les bribes de la séquence W-H, correspondant au symbole (paquet de 6 bits) à émettre sont répliquées d'un facteur 4, autrement dit chaque bribe $W_n(k)$ de la séquence d'utilisateur $n$ est successivement multipliée (en 310) par 4 éléments du code d'embrouillage, $s(4k)$, $s(4k + 1)$, $s(4k + 2)$, $s(4k + 3)$ pour fournir la séquence embrouillée $\omega_s(k)$.

Le code d'embrouillage (ou code long) est lui-même obtenu à partir d'une séquence de longueur maximale, encore dénommée M-séquence. On rappelle qu'une telle séquence peut être générée au moyen d'un registre à décalage rebouclé sur lui-même, dont les prises correspondent aux coefficients d'un polynôme primitif. Si le degré de ce polynôme est $q$, la période de la M-séquence est de $2^q - 1$.

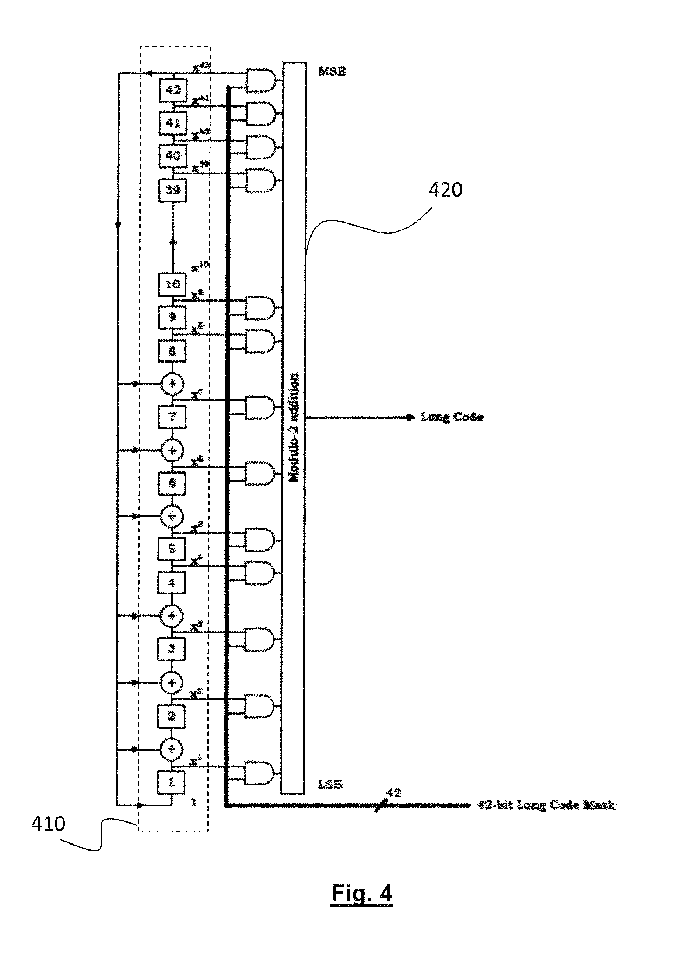

La Fig. 4 représente schématiquement la structure d'un générateur d'un code long pour un système CDMA 2000. Le générateur comprend un registre à décalage (à 42 étages), 410, rebouclé sur lui-même, dont les prises correspondent aux puissances du polynôme générateur :

$$g(x) = x^{42} + x^{41} + x^{40} + x^{39} + x^{37} + x^{36} + x^{35} + x^{32} + x^{26} + x^{25} +$$
$$x^{24} + x^{23} + x^{21} + x^{20} + x^{17} + x^{16} + x^{15} + x^{11} + x^{9} + x^{7} + 1 \tag{1}$$

Les valeurs fournies par les étages du registre sont masquées à l'aide d'un ET logique avec un masque binaire de 42 bits et les valeurs ainsi masquées sont sommées modulo 2, en 420. Ainsi à chaque décalage du registre, un nouveau bit est fourni par le sommateur 420. La succession des bits fournis par le sommateur donne le code d'embrouillage.

La sortie du sommateur 420 peut s'exprimer comme :

$$s(k) = \sum_{i=0}^{r-1} m(i)s_0\left(k + i\right) \tag{2}$$

où $s_0(k)$ est la M-séquence en absence de masquage, $k$ est un indice temporel, $i$ est le rang de l'étage dans le registre et $m(i)$, $i=0,..,r-1$ (dans le système CDMA2000 $r=42$) est le masque binaire propre à l'utilisateur.

On peut montrer que si $s_0(k)$ est une M- séquence alors $s_0(k) \oplus s_0(k+n)$ , autrement dit la somme de deux versions décalées d'une même séquence est également une M- séquence de même polynôme générateur. On en déduit que $s(k)$ donnée par l'expression (2) est encore une M- séquence de même polynôme générateur mais correspondant à un état initial différent du registre à décalage.

Nous nous placerons dans la suite dans le scenario représenté en Fig. 2 lorsque le système macro-cellulaire est de type CDMA2000.

Nous supposerons que le récepteur de la station de base, 120, dans le réseau femto-cellulaire est synchronisé avec la macro-cellule. En pratique, il est possible de déterminer le début de chaque trame grâce au canal pilote (sur lequel est transmis un pilote étalé spectralement) et de caler par rapport à une référence temporelle grâce au message *Synchronization Channel Message* (fournissant l'offset du code d'étalement à un instant précis Sys-Time). Cette référence temporelle est la référence d'horloge issue du système GPS.

Le détail du mécanisme de synchronisation est décrit dans le document 3GPP2 CS002-A intitulé « Physical Layer Standard for CDMA2000 Spread Spectrum Systems - Release A », du 9 Juin 2000, disponible sur le site de l'ETSI. On suppose dans la suite que le récepteur de la station de base est synchronisé sur un début de trame.

On suppose également que le récepteur a la connaissance des séquences d'étalement et du polynôme générateur du code d'embrouillage. En revanche, le récepteur ne connaît pas *a priori* le masque binaire utilisé par le terminal 130 et donc son code d'embrouillage.

Le signal reçu par la station de base 120 en provenance du terminal 130 peut s'exprimer par :

$$r(k) = (H_1I + jH_2Q)e + \eta(k) \tag{3}$$

où $e$ est le vecteur des bribes, avant étalement de spectre, autrement dit le produit des séquences W-H par le code d'embrouillage, $I$ et $Q$ sont des matrices diagonales dont les éléments sont respectivement les séquences d'étalement en phase et en quadrature, et $H_1$, $H_2$ sont des matrices modélisant la mise en forme des voies en phase et en quadrature (avec un facteur de sur-échantillonnage égal à 2), et $\eta(k)$ est un échantillon de bruit sur le canal supposé être additif gaussien (AWGN).

Le signal reçu $r(k)$ est d'abord filtré au moyen d'un filtre adapté au code d'étalement, à la mise en forme des impulsions (filtrage 280 en Fig. 2). Le filtrage en question effectue une décimation d'un facteur 2. Plus précisément en posant $H_0 = H_1I + jH_2Q$, le signal émis $e$ est estimé par application de matrice pseudo-inverse $H_0^\dagger$ Le signal $e$, en sortie du filtre adapté, peut alors s'exprimer sous la forme :

$$y(k) = e^{i\theta} S(k) W_n\left(\left\lfloor \frac{k}{4} \right\rfloor\right) + n(k) \tag{4}$$

où $\theta$ est le déphasage introduit par le canal, $S(k)$ est la bribe du code d'embrouillage généré à l'instant $kT_c$ (où $T_c$ est la période bribe des séquences W-H), $W_n(i)$ la $i^{ème}$ bribe de la $n^{ième}$ séquence de Walsh-Hadamard, $\lfloor x \rfloor$ désigne la valeur entière de $x$ et $n(k)$ est un échantillon de bruit supposé blanc, gaussien, centré et de variance $\sigma^2$.

Du fait de la répétition des symboles de la séquence W-H dans l'embrouillage, comme expliqué plus haut en relation avec la Fig. 3, on a les relations suivantes :

$$
\begin{aligned}
y(4k) &= e^{i\theta} S(4k) W_n(k) + n(4k) \\
y(4k+1) &= e^{i\theta} S(4k+1) W_n(k) + n(4k+1) \\
y(4k+2) &= e^{i\theta} S(4k+2) W_n(k) + n(4k+2) \\
y(4k+3) &= e^{i\theta} S(4k+3) W_n(k) + n(4k+3)
\end{aligned} \tag{5}
$$

On obtient ainsi une série de 4 échantillons $y(4k+i)$, $i=0,..,3$ en sortie du filtre adapté correspondant à une même bribe $W_n(k)$ de la séquence W-H.

On effectue alors un traitement différentiel sur cette série d'échantillons. Plus précisément ce traitement consiste, à effectuer le produit hermitien de deux échantillons de la série, soit, si l'on note $U_{i,j}(k) = y(4k+i+j)\,y(4k+i)^*$ :

$$
\begin{aligned}
U_{i,j}(k) &= S(4k+i+j)S(4k+i) + S(4k+i+j)e^{i\theta}W_n(k)n(4k+i)^* \\
&+ S(4k+i)e^{i\theta}W_n(k)n(4k+i+j)^* + n(4k+i+j)n(4k+i)^*
\end{aligned} \tag{6}
$$

C'est-à-dire, si l'on regroupe les trois derniers termes de bruit sous la forme d'un échantillon de bruit $v_{i,j}(k)$ :

$$U_{i,j}(k) = S(4k+i+j)S(4k+i) + v_{i,j}(k) \tag{7}$$

On obtient ainsi des valeurs différentielles $U_{i,j}(k)$, $i=0, .., 3$, $j=i+1, ..., 3$, qui ne dépendent plus que du code d'embrouillage et non de la séquence W- H émise par l'utilisateur 130 ou du déphasage introduit par le canal.

La bribe $S(k) = \pm 1$ du code d'embrouillage est reliée au bit $s(k)$ de ce même code par $S(k) = 2s(k) - 1$. Si l'on pose $X_{ij}(k) = S(4k+i+j) S(4k+i)$ et $x_{ij} = (1+X_{ij}(4k))/2$, on a :

$$x_{ij}(4k) = s(4k + i + j) + s(4k + i) \qquad (8)$$

l'addition étant bien entendu binaire.

Pour des valeurs données de $i,j$, la séquence $x_{ij}(4k)$ est donc la somme de deux M-séquences décimées d'un facteur 4 et décalées (de $j$ bits).

Etant donné que la décimation d'une M-séquence par une puissance de 2 n'est autre qu'une version décalée de cette séquence et que la somme de deux versions décalées d'une même M-séquence donne encore une version décalée de cette séquence, on comprend que, pour un couple $(i,j)$ donné, $x_{ij}(4k)$ est une M-séquence de même polynôme générateur que $s(k)$, présentant pour un instant donné, un contenu différent du registre à décalage.

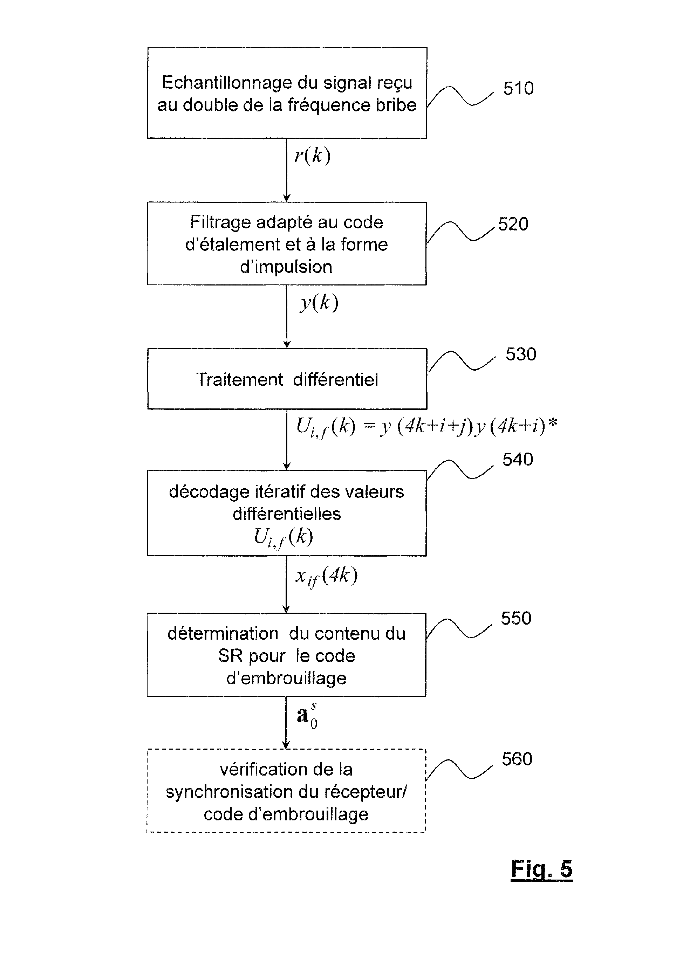

Ces précisions ayant été données, nous décrirons ci-après la Fig. 5, qui représente schématiquement une méthode de détermination de code d'embrouillage selon un mode de réalisation de l'invention.

A l'étape 510, le signal reçu est échantillonné au double de la fréquence bribe, $1/T_c$, des codes d'étalement utilisés dans la cellule du réseau macro-cellulaire CDMA 2000.

A l'étape 520, le signal reçu $r(k)$ (par le récepteur de la station de base femto-cellulaire 120) est filtré à l'aide d'un filtrage adapté au code d'étalement, à la mise en forme des impulsions et, le cas échéant, à la fonction de transfert du canal. On obtient un signal filtré échantillonné $y(k)$ à la fréquence bribe du code d'embrouillage comme expliqué plus haut.

A l'étape 530, on effectue un traitement différentiel des échantillons du signal filtré, correspondant à un même symbole d'une séquence de W-H émis par l'utilisateur. On obtient ainsi les valeurs différentielles $U_{ij}(k)$ comme indiqué plus haut. Le calcul peut être effectué pour un couple, plusieurs ou encore tous les couples $(i,j)$, $i=0,...,3$, $j=i+1,...,3$.

Les étapes 510 à 530 ont déjà été décrites et ne seront donc pas reprises en détail ici.

A l'étape 540, on effectue un décodage itératif des valeurs différentielles $U_{i,j}(k)$, $i=0, ..., 3$, $j=i+1, ..., 3$, issues de l'étape précédente pour obtenir les séquences $X_{i,j}(k)$. Etant donné que la séquence de bits $x_{ij}(4k)$ est une M-séquence obtenue par le polynôme générateur $g(x)$ donné par (1), elle peut être décodée par un algorithme de propagation de croyance (*belief propagation decoding*) tel que décrit par exemple dans l'article de K. M. Chugg and M. Zhu intitulé "A New Approach to Rapid PN Code Acquisition Using Iterative Message Passing Techniques", IEEE Journal on Selected Areas in Communications, vol. 25, no. 5, May 2005. En effet, un générateur de séquence maximale de polynôme générateur :

$$g(x) = g_0 + g_1 x + ... + g_r x^r \qquad (9)$$

peut être vu comme un codeur de matrice de parité de taille $(M-r) \times M$ :

$$\mathbf{H}_{\text{LFSR}} = \begin{pmatrix} g_r & g_{r-1} & \cdots & g_1 & g_0 & 0 & 0 & 0 & \cdots & 0 \\ 0 & g_r & g_{r-1} & \ddots & g_1 & g_0 & 0 & 0 & \cdots & 0 \\ \vdots & \ddots & \ddots & \ddots & \ddots & \ddots & \ddots & \ddots & \ddots & 0 \\ 0 & 0 & \cdots & g_r & g_{r-1} & \cdots & g_1 & g_0 & \cdots & 0 \end{pmatrix} \qquad (10)$$

où $M$ est le nombre de bits successifs considérés en sortie du générateur. Cette matrice de parité reflète les contraintes entre les bits de la M- séquence et le codeur peut être représenté, à l'instar des codeurs LDPC, par une suite de noeuds de variable et une suite de noeuds de contrainte. Le décodage se fait alors de manière itérative, par passage de messages entre les noeuds de variable et les noeuds de contraintes.

Dans le cas présent, les observables sont les valeurs $U_{i,j}(k)$. L'algorithme permet d'estimer à chaque itération les valeurs souples (par exemple les logarithmes de rapports de vraisemblance ou LLRs) des bits $x_{ij}(4k)$. Les bits $x_{ij}(4k)$ sont ensuite obtenus à l'aide d'une décision dure sur ces LLRs.

A l'étape 550, on déduit de l'étape précédente le contenu du registre à décalage pour le code d'embrouillage $s(k)$. Ce contenu est un mot de 42 bits $\mathbf{a}_0^s = \left( a_0^s, a_1^s, ..., a_{r-1}^s \right)^T$ (avec $r$=42) qui définit le code de manière univoque.

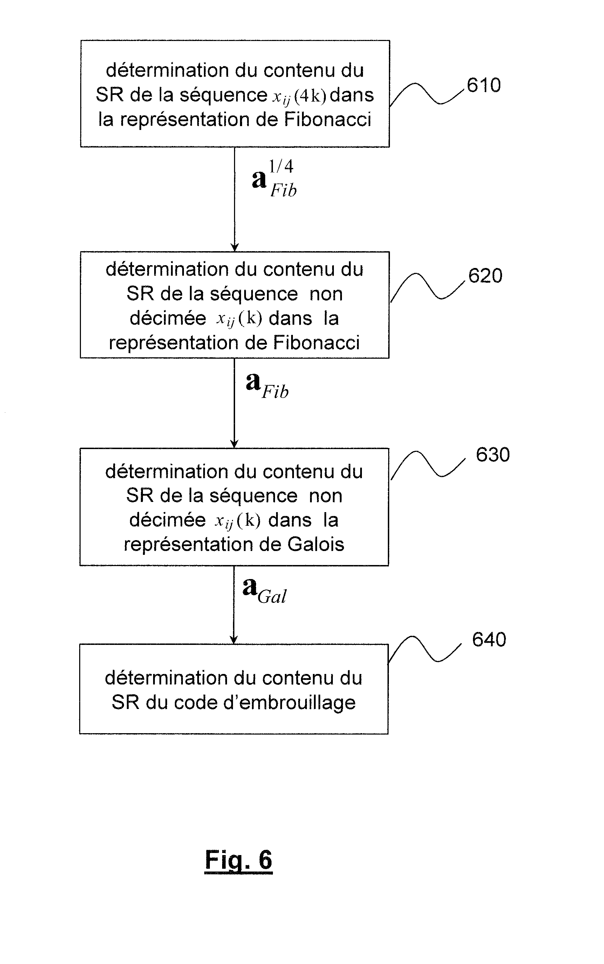

La Fig. 6 illustre schématiquement le détail de l'étape 550 selon un mode de réalisation de l'invention.

A l'étape 610, on détermine le contenu du registre à décalage, en début de trame, du générateur de la M-séquence $x_{ij}(4k)$. Compte tenu de la connexion entre les étages du registre dans la représentation de Fibonacci, le contenu du registre à décalage est le mot formé par $x_{ij}(4k)$, $k$=0,...,41.

A partir du contenu de ce registre à décalage, on détermine en 620 le contenu du registre à décalage du générateur de la M-séquence non décimée, $x_{ij}(k)$. On rappelle que la séquence décimée $x_{ij}(4k)$ est de même polynôme générateur que la séquence d'origine $x_{ij}(k)$, qu'elle mais présente, à instant de référence donné, un contenu de registre différent.

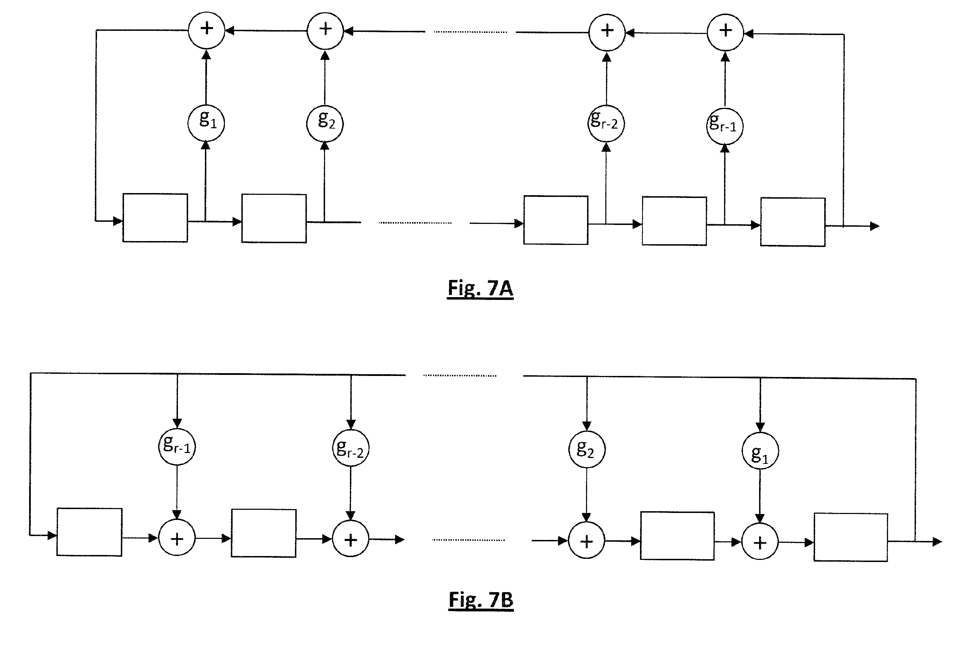

Le contenu du registre à décalage pour la séquence décimée peut être obtenu dans une représentation de Fibonacci du générateur comme illustré en Fig. 7A. La représentation de Galois (précédemment utilisée en Fig. 4) du même générateur est donnée en Fig. 7B. Le contenu du registre dans la représentation de Fibonacci peut être obtenu au moyen de la méthode décrite dans l'article de B. Arazi intitulé « Decimation of m-sequences leading to any desired phase shift », publié dans Electronics Letters, Vol.13, No.7, March 1977.

Plus précisément, si l'on note $\mathbf{a}_{Fib}^{1/4}$ le vecteur de taille $r$=42 donnant le contenu du registre à décalage dans la représentation de Fibonacci du générateur de la séquence $x_{ij}(4k)$, et $\mathbf{a}_{Fib}$ le contenu du registre à décalage pour la séquence décimée $x_{ij}(k)$ on a:

$$\mathbf{a}_{Fib} = \mathbf{T}_{undecim}^{1/2} \mathbf{T}_{undecim}^{1/2} \mathbf{a}_{Fib}^{1/4} \tag{11}$$

où $\mathbf{T}_{undecim}^{1/2}$ est une matrice de taille $r \times r$ donnant le changement d'état entre la séquence décimée et la séquence d'origine pour une décimation de facteur ½.

La matrice $\mathbf{T}_{undecim}^{1/2}$ peut être obtenue selon la méthode détaillée dans l'article précité. Pour ce faire, on calcule d'abord $\alpha^{-1}$, la racine du polynôme inverse du polynôme générateur ($g^{-1}(x) = g(x) x^r$) de la séquence non décimée, $\mathbf{T}_{undecim}^{1/2}$ est alors la matrice binaire dont la $i$ème ligne est donnée par les coefficients de décomposition, $a_{ik}$ :

$$\alpha^{-ip} = \sum_{k=0}^{r} a_{i,k} \alpha^{-k} \tag{12}$$

où $p$ est un entier vérifiant la relation de congruence $2p \equiv 1 \bmod (2^r - 1)$, par exemple $p = 2^{r-1}$.

On peut montrer que les relations suivantes sont vérifiées, respectivement pour les lignes paires et les lignes impaires :

$$\alpha^{-2ip} = \alpha^{-i} \tag{13-1}$$

$$\alpha^{-(2i+1)p} = \alpha^{-p-i} \qquad\qquad (13\text{-}2)$$

Les lignes paires de la matrice $\mathbf{T}^{1/2}_{undecim}$ sont obtenues directement à partir de (12) et (13-1). Pour les lignes impaires on calcule le reste de la division polynomiale de $\alpha^{-p-i}$ par le polynôme inverse $g^{-1}$, soit :

$$\alpha^{-p-i} = \sum_{k=0}^{r-1} c_{i,k}\alpha^{-k} \qquad\qquad (14)$$

La ligne impaire $2i+1$ étant alors donnée par les coefficients $c_{i,k}$ en vertu de (12), (13-2) et (14).

Au final, on obtient le contenu du registre à décalage $\mathbf{a}_{Fib}$ pour la séquence non décimée.

A l'étape 630, on détermine le contenu du registre à décalage dans la représentation de Galois à partir du contenu du registre à décalage dans la représentation de Fibonacci.

De manière générale, si l'on note $\mathbf{a}_{Fib}$ le contenu du registre à décalage dans la représentation de Fibonacci et $\mathbf{a}_{Gal}$ le contenu du registre à décalage dans la représentation de Galois et si l'on note $\mathbf{T}^{GF}$ la matrice de transposition d'états de la représentation de Fibonacci à celle de Galois, on a :

$$\mathbf{a}_{Gal} = \mathbf{T}^{GF}\mathbf{a}_{Fib} \qquad\qquad (15)$$

où les éléments de la matrice de transposition sont donnés par, en prenant les conventions de notation des Figs. 7A et 7B :

$$T^{GF}_{ij} = g(i-j) \text{ si } j \le i \text{ et } T^{GF}_{ij} = 0 \text{ sinon} \qquad\qquad (16)$$

Il convient de noter que pour le système CDMA 2000, l'ordre des étages du registre à décalage est inversé par rapport à celui des Figs. 7A et 7B.

Autrement dit, si $I$ est l'ensemble d'indices défini par $\{7, 9, 11, 15, 16, 17, 20, 21, 23, 24, 25, 26, 32, 35, 36, 37, 39, 40, 41, 42\}$, $g(q) = 1$ si $q \in I$ et $g(i) = 0$ sinon.

A l'étape 640, on détermine le contenu du registre à décalage, $\mathbf{a}_0^s = \left(a_0^s,...,a_{r-1}^s\right)^T$, du générateur du code d'embrouillage $s(k)$. On rappelle qu'après décimation des valeurs différentielles on a:

$$x_{ij}(k) = s\left(k+i+j\right) + s(k+i) \qquad\qquad (17)$$

pour $i=0,..,3$ et $j=i+1,...,3$.

La M-séquence $x_{ij}(k)$ est donc une version retardée de la M-séquence $s(k)$.

Si l'on note $\mathbf{G}$ la matrice de transition d'état pour le générateur de la séquence $s(k)$ dans la représentation de Galois, c'est-à-dire avec les conventions de la Fig. 7A ( $g(q)=1$ si $q \in I$ et $g(q)=0$ sinon) :

$$\mathbf{G} = \begin{bmatrix} g_1 & 1 & 0 & 0 & \cdots & 0 \\ g_2 & 0 & 1 & 0 & \cdots & 0 \\ g_3 & 0 & 0 & 1 & \cdots & 0 \\ \vdots & & \vdots & & \cdots & \vdots \\ g_{r-1} & 0 & 0 & 0 & \cdots & 1 \\ g_r & 0 & 0 & 0 & \cdots & 0 \end{bmatrix} \qquad (18)$$

Le contenu du registre de la séquence $s(k+i)$, noté $\mathbf{a}_i^s$, se déduit de celui de la séquence $s(k)$, $\mathbf{a}_0^s$, en appliquant $i$ fois la matrice de changement d'état, soit $\mathbf{a}_i^s = \mathbf{G}^i \mathbf{a}_0^s$ et donc, d'après (17) :

$$\mathbf{a}_{Gal} = \left( \mathbf{G}^{i+j} + \mathbf{G}^i \right) \mathbf{a}_0^S \qquad (19)$$

Le calcul du vecteur $\mathbf{a}_{Gal}$ est effectué pour le ou les couples $(i,j)$, $i=0,...,3$, $j=i+1,...,3$ pris en compte dans le calcul différentiel.
Le contenu du registre à décalage générant le code d'embrouillage est par conséquent donné par :

$$\mathbf{a}_0^S = \left( \mathbf{G}^{i+j} + \mathbf{G}^i \right)^{-1} \mathbf{a}_{Gal} = \left( \mathbf{G}^{i+j} + \mathbf{G}^i \right)^{-1} \mathbf{T}^{GF} \mathbf{T}_{undecim}^{1/2} \mathbf{T}_{undecim}^{1/2} \mathbf{a}_{Fib}^{1/4} \qquad (20)$$

Revenant à la Fig. 5, de manière optionnelle, on peut vérifier en 560 si le récepteur de la station de base 120 est bien synchronisé avec le code d'embrouillage du terminal 130. Plus précisément, cette synchronisation est obtenue lorsque l'échantillon $y(4k)$ en sortie du filtre adapté coïncide avec le bit $s(4k)$ du code d'embrouillage. On connaît alors la position temporelle de chaque bribe de la séquence de W-H.
On rappelle qu'à l'étape 530, on obtient à partir de la sortie du filtre adapté, les valeurs différentielles $U_{i,j}(k)$ $=y(4k+i+j)\,y(4k+i)$ *. Nous qualifierons ces valeurs différentielles d' « observées ».
Une fois que le contenu $\mathbf{a}_0^S$ du registre à décalage du générateur du code d'embrouillage a été estimé à l'étape 550, on peut générer la séquence $s(k)$ à partir de cet état, et donc les séquences $S(4k+i+j)$ et $S(4k+i)$.
On en calcule ensuite les valeurs différentielles $X_{ij}(k) =S(4k+i+j)\,S(4k+i)$ correspondant à la séquence $s(k)$.
On effectue ensuite la corrélation entre les valeurs différentielles observées avec les valeurs différentielles calculées, soit :

$$V = \sum_{i,j} \sum_{k=0}^{L} U_{i,j}(k).X_{i,j}(4k) \qquad (21),$$

la corrélation étant prise à chaque fois sur une séquence de $L$ échantillons.
On compare le résultat de la corrélation $V$ à un seuil prédéterminé, $\lambda$.
Si $V > \lambda$ on en conclut que le récepteur est bien synchronisé avec le code d'embrouillage. A défaut, le récepteur n'est pas synchronisé.
Connaissant le code d'embrouillage du terminal 130 et son code d'étalement, le récepteur de la station de base 120 peut estimer les symboles émis par le terminal, c'est-à-dire les paquets de 6 bits codés par les séquences W-H. Il peut alors régénérer la contribution au signal reçu provenant de ce terminal, à partir du code d'embrouillage, du code d'étalement, du filtre de mise en forme et de la réponse impulsionnelle du canal. Cette contribution est alors soustraite du signal reçu, de manière connue en soi, pour éliminer l'interférence due au terminal 130. Le cas échéant cette opération peut être répétée en parallèle ou en série pour éliminer l'interférence de plusieurs utilisateurs du système macro-cellulaire CDMA 2000.

**Revendications**

1. Méthode d'estimation de code d'embrouillage utilisé sur une liaison montante d'un terminal dans un système CDMA 2000, le signal émis par le terminal sur ladite liaison étant embrouillé au moyen du code d'embrouillage, puis étalé spectralement à l'aide d'un code d'étalement et mis en forme à l'aide d'un filtre de mise en forme, le code d'embrouillage étant généré par un générateur comprenant un registre à décalage rebouclé sur lui-même, **caractérisée en ce que** :

   - on échantillonne (510) au double de fréquence bribe du code d'étalement le signal reçu par un récepteur ;
   - on filtre le signal ainsi échantillonné au moyen d'un filtre adapté au code d'étalement et au filtre de mise en forme (520) pour obtenir une série d'échantillons à ladite fréquence bribe ;
   - on effectue un traitement différentiel (530) des échantillons en sortie du filtre adapté, ledit traitement différentiel fournissant des valeurs différentielles obtenues comme produit hermitien d'échantillons de ladite série ;
   - on effectue un décodage itératif (540) desdites valeurs différentielles pour obtenir le contenu du registre à décalage du générateur d'une première M-séquence représentant la somme de deux versions décalées du code d'embrouillage ;

   - on détermine (550) à partir du contenu du registre à décalage du générateur de ladite première M-séquence le contenu $\left(\mathbf{a}_0^s\right)$ du registre à décalage du générateur du code d'embrouillage en un instant donné.

2. Méthode d'estimation de code d'embrouillage selon la revendication 1, **caractérisée en ce que** l'on vérifie que le récepteur est bien synchronisé par rapport au code d'embrouillage (560) en :

   - calculant des valeurs différentielles à partir de la somme de deux versions décalées du code d'embrouillage précédemment estimé ;
   - corrélant sur un nombre prédéterminé d'échantillons les valeurs différentielles en sortie du filtre adapté avec les valeurs différentielles calculées à l'étape précédente ;
   - déterminant si le résultat de ladite corrélation est supérieur à un seuil prédéterminé.

3. Méthode d'estimation de code d'embrouillage selon la revendication 1 ou 2, **caractérisée en ce que**, dans le traitement différentiel, les valeurs différentielles sont obtenues par $U_{i,j}(k)=y(4k+i+j)y(4k+i)^*$, $i=0,...,3$ et $j=i+1,3$, où $y(k)$ représente un échantillon en sortie du filtre adapté.

4. Méthode d'estimation de code d'embrouillage selon l'une des revendications précédentes, **caractérisée en ce que** ledit décodage itératif est un décodage par passage de messages de croyance entre des noeuds de variables et des noeuds de contraintes, lesdites contraintes étant fournies par le polynôme générateur du code d'embrouillage.

5. Méthode d'estimation de code d'embrouillage selon la revendication 4, **caractérisée en ce que** l'on détermine le contenu du registre à décalage du générateur de code d'embrouillage en :

   - déterminant (610), à partir de ladite première M-séquence, le contenu ($\mathbf{a}_{Fib}$) du registre à décalage du générateur d'une seconde M-séquence dans une représentation de Fibonacci, la première M-séquence étant décimée par rapport à la seconde M-séquence ;
   - déterminant (620) le contenu ($\mathbf{a}_{Gal}$) du registre à décalage d'un générateur de ladite seconde M-séquence selon une représentation de Galois à partir du contenu ($\mathbf{a}_{Fib}$) du registre à décalage dans la représentation de Fibonacci ;

- déterminant (630) le contenu $\left( \mathbf{a}_0^s \right)$ du registre à décalage du générateur du code d'embrouillage à partir du contenu ($\mathbf{a}_{Gal}$) du registre à décalage du générateur de ladite seconde m-séquence selon la représentation de Galois.

6. Méthode d'estimation de code d'embrouillage selon la revendication 5, **caractérisée en ce que** la seconde M-séquence est de même polynôme générateur que la première M-séquence et que la première M-séquence est la décimée d'un facteur 4 de la seconde M-séquence.

7. Méthode d'estimation de code d'embrouillage selon la revendication 5 ou 6, **caractérisée en ce que** le contenu, $\mathbf{a}_0^s$, du registre à décalage du générateur du code d'embrouillage est déterminé à partir du contenu, $\mathbf{a}_{Gal}$, du registre à décalage du générateur de ladite seconde m-séquence selon la représentation de Galois au moyen de $\mathbf{a}_0^S = \left( \mathbf{G}^{i+j} + \mathbf{G}^i \right)^{-1} \mathbf{a}_{Gal}$ où $\mathbf{G}$ est la matrice de transition d'état du générateur du code d'embrouillage dans la représentation de Galois et $i,j$ sont des entiers tels que $i=0,...,3$ et $j=i+1,3$.

**Fig. 1**

210

220

230

240

Block
Interleaver
(576
Symbols)

Repeated
Code Symbol

28.8 ksps

64-ary
Orthogonal
Modulator

307.2 kcps

Data
Burst
Randomizer

Long Code
Mask
for User m

Long Code
Generator
(1.2288
Mcps)

I-Channel
PN Sequence

250

260

270

280

cos(2πf$_c$t + φ)

290

I

Signal Point
Mapping
0 → +1
1 → −1

Channel
Gain

Baseband
Filter

+

Σ

s(t)

250

Q

1/2 PN
Chip
Delay

Signal Point
Mapping
0 → +1
1 → −1

Channel
Gain

Baseband
Filter

+

Q-Channel
PN Sequence

sin(2πf$_c$t + φ)

**Fig. 2**

| $W_n(k+1)$ | $W_n(k)$ |
|---|---|

$\omega_s(k)$

| s(4k+7) | s(4k+6) | s(4k+5) | s(4k+4) | s(4k+3) | s(4k+2) | s(4k+1) | s(4k) |
|---|---|---|---|---|---|---|---|

**Fig. 3**

13

**Fig. 4**

**Fig. 5**

détermination du contenu du SR de la séquence $x_{ij}(4k)$ dans la représentation de Fibonacci — 610

$$\mathbf{a}_{Fib}^{1/4}$$

détermination du contenu du SR de la séquence non décimée $x_{ij}(k)$ dans la représentation de Fibonacci — 620

$$\mathbf{a}_{Fib}$$

détermination du contenu du SR de la séquence non décimée $x_{ij}(k)$ dans la représentation de Galois — 630

$$\mathbf{a}_{Gal}$$

détermination du contenu du SR du code d'embrouillage — 640

## Fig. 6

Fig. 7A

Fig. 7B

**EP 2 639 967 A1**

Europäisches
Patentamt

European
Patent Office

Office européen
des brevets

# RAPPORT DE RECHERCHE EUROPEENNE

Numéro de la demande

EP 13 15 8690

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MOOSAVI R ET AL: "A Fast Scheme for Blind Identification of Channel Codes", GLOBAL TELECOMMUNICATIONS CONFERENCE (GLOBECOM 2011), 2011 IEEE, IEEE, 5 décembre 2011 (2011-12-05), pages 1-5, XP032118709, DOI: 10.1109/GLOCOM.2011.6133507 ISBN: 978-1-4244-9266-4 * abrégé * * page 1, alinéa I - alinéa II * ----- | 1-7 | INV. H04B1/7073 H04L1/00 H04L27/26 |
| A | US 2007/206638 A1 (SANTORU JOSEPH [US] ET AL) 6 septembre 2007 (2007-09-06) * page 5, alinéa 51 - alinéa 52 * * page 8, alinéa 92 * * page 9, alinéa 103 - alinéa 104 * * figure 6 * ----- | 1-7 | |
| A | WO 2008/049713 A1 (ERICSSON TELEFON AB L M [SE]; LINDOFF BENGT [SE]; WILHELMSSON LEIF [SE] 2 mai 2008 (2008-05-02) * page 6, ligne 26 - ligne 28 * * page 8, ligne 3 - ligne 15 * * page 10, ligne 29 - page 11, ligne 24 * * figures 1-4 * ----- | 1-7 | DOMAINES TECHNIQUES RECHERCHES (IPC) H04B H04L H04J |

Le présent rapport a été établi pour toutes les revendications

| Lieu de la recherche | Date d'achèvement de la recherche | Examinateur |
|---|---|---|
| La Haye | 22 mars 2013 | Amadei, Davide |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 15 8690

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-03-2013

| Document brevet cité au rapport de recherche | Date de publication | Membre(s) de la famille de brevet(s) | Date de publication |
|---|---|---|---|
| US 2007206638 A1 | 06-09-2007 | CA 2577539 A1<br>CN 101083500 A<br>EP 1835676 A2<br>JP 4537414 B2<br>JP 2007259422 A<br>KR 20070080845 A<br>US 2007206638 A1<br>US 2010157881 A1 | 08-08-2007<br>05-12-2007<br>19-09-2007<br>01-09-2010<br>04-10-2007<br>13-08-2007<br>06-09-2007<br>24-06-2010 |
| WO 2008049713 A1 | 02-05-2008 | AT 478504 T<br>EP 2084875 A1<br>TW 200832986 A<br>US 2008101511 A1<br>WO 2008049713 A1 | 15-09-2010<br>05-08-2009<br>01-08-2008<br>01-05-2008<br>02-05-2008 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- Physical Layer Standard for CDMA2000 Spread Spectrum Systems - Release A. *3GPP2 CS002-A,* 09 Juin 2000
- **K. M. CHUGG ; M. ZHU.** A New Approach to Rapid PN Code Acquisition Using Iterative Message Passing Techniques. *IEEE Journal on Selected Areas in Communications,* Mai 2005, vol. 25 (5
- **B. ARAZI.** Decimation of m-sequences leading to any desired phase shift. *Electronics Letters,* Mars 1977, vol. 13 (7